# EUROPÄISCHE PATENTSCHRIFT

(11) **EP 1 680 581 B1**
(45) Veröffentlichungstag und Bekanntmachung des Hinweises auf die Patenterteilung: **11.04.2007**
(21) Anmeldenummer: 04765345.6
(22) Anmeldetag: 17.09.2004
(51) Int. Cl.: F01N 3/28, F01N 11/00

(54) **BESCHICHTETER WABENKÖRPER MIT MESSFÜHLER**
COATED HONEYCOMB BODY WITH A SENSOR
CORPS ENDUIT EN NID D'ABEILLES A SONDE

(30) Priorität: 30.09.2003 DE 10345896
(43) Veröffentlichungstag der Anmeldung: 19.07.2006
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HIRTH, Peter, 51503 Rösrath (DE); KONIECZNY, Jörg-Roman, 53804 Much (DE)
(74) Vertreter: Rössler, Matthias
(86) Internationale Anmeldenummer: PCT/EP2004/010452
(87) Internationale Veröffentlichungsnummer: WO 2005/038207

(56) Entgegenhaltungen:
- EP-A- 1 273 773
- DE-A- 3 841 685
- US-A- 5 648 050
- PATENT ABSTRACTS OF JAPAN Bd. 1999, Nr. 09, 30. Juli 1999 (1999-07-30) & JP 11 107828 A (DENSO CORP), 20. April 1999 (1999-04-20)

## Beschreibung

Die Erfindung betrifft einen Wabenkörper mit für ein Fluid durchströmbaren Kanälen, die sich zwischen zwei Stirnflächen erstrecken, und mit mindestens einem Messfühler, der sich zumindest teilweise in den Wabenkörper hinein erstreckt. Weiterhin wird noch eine Abgasanlage enthaltend einen solchen Wabenkörper vorgeschlagen.

Im Automobilbau finden Wabenkörper, deren grundsätzliche Bauweise beispielsweise aus der EP 0 245 737, der EP 0 430 945 und der GB 1,452,982 bekannt sind, vielfältige Anwendungen, vor allem werden sie als Katalysator-Trägerkörper in der Abgasaufbereitung eingesetzt. Im Zuge von durch den Gesetzgeber immer weiter herabgesetzten Grenzwerten für erlaubte Schadstoffkonzentrationen in an die Umwelt abgegebenem Abgas eines Automobils werden Verfahren, die eine Regelung eines Abgasaufbereitungsprozesses ermöglichen, immer wichtiger. Die zu einer solchen Regelung benötigten Messfühler, die es gestatten, beispielsweise die Abgaszusammensetzung oder auch Schadstoffkonzentrationen im Abgas zu bestimmen, sind ein wesentlicher Bestandteil einer geregelt betriebenen Abgasaufbereitungsanlage. Dadurch bedingt sind Wabenkörper, welche die Aufnahme eines oder mehrerer Messfühler gestatten und somit Daten für eine Regelung der katalytischen Aufbereitung bereitstellen, wie z. B. aus der DE 88 16 154 U1 oder der DE 3841685 A1 bekannt, ein wichtiges Element von geregelt betriebenen Abgasaufbereitungsanlagen.

Als Messfühler kommen beispielsweise Sonden, die zur Bestimmung der Abgaszusammensetzung dienen, wie etwa Lambda-Sonden, sowie Kohlenwasserstoffsensoren (HC-Sensoren), die den Kohlenwasserstoffgehalt des Abgases messen, in Betracht. Weiterhin sind auch sogenannte Stickoxid-Sensoren einsetzbar, die den Anteil der Stickoxide im Abgas bestimmen.

Derartige Messfühler werden insbesondere im Zusammenhang mit einer sogenannten "On-Bord-Diagnose" (OBD) eingesetzt. Ziel der OBD ist eine ständige Überwachung der abgasrelevanten Komponenten in den Fahrzeugen, wobei ein sofortiges Erkennen und Anzeigen von wesentlichen Emissionserhöhungen über die Lebensdauer eines jeden Fahrzeuges stattfinden soll. Dadurch sollen dauerhaft niedrige Abgasemissionen gewährleistet werden.

Bei der Überwachung der Funktionalität eines Katalysators wird bevorzugt die Sauerstoffkonzentration im Abgas vor und hinter dem Katalysator bestimmt. Hierzu ist es üblich, jeweils vor und hinter einen Katalysator eine Lambda-Sonde zur Bestimmung des Sauerstoffgehalts zu positionieren. Mit Hilfe der vor dem Katalysator angeordneten Lambda-Sonde ist insbesondere ein Rückschluss auf das der Verbrennungskraftmaschine zugeführte Luft-Brennstoff Gemisch möglich. Der dem Katalysator nachgeschaltete Sensor generiert z.B. einen Vergleichswert im Hinblick auf die Sauerstoffkonzentration im Abgas, so dass sich Rückschlüsse auf die Funktionalität des Katalysators durchführen lassen. Der Sauerstoff wird zumindest teilweise zur Umsetzung von im Abgas enthaltenen Schadstoffen verwendet, so dass eine geringe Konzentration von Sauerstoff am Austritt des Katalysators für eine effektive Umsetzung spricht.

Besonders problematisch bei derartigen Messfühlern ist neben dem beachtlichen Platzbedarf auch, dass diese sehr empfindlich auf unterschiedliche Umgebungsbedingungen reagieren, wie sie unter Umständen auch in Abgassystemen auftreten. Dabei ist insbesondere die Empfindlichkeit im Hinblick auf Wasser bzw. Wasserdampf zu erwähnen sowie die herrschenden hohen Temperaturen in der aggressiven Umgebung, die zu einer ggf. unerwünscht schnellen Alterung des Messfühlers führen. Gerade im Hinblick auf eine OBD ist es jedoch erforderlich, dass die Sensoren zur Regelung des Abgasverhaltens bzw. Überwachung der Komponenten in der Abgasanlage dauerhaft funktionstüchtig sind.

Hiervon ausgehend ist es Aufgabe der vorliegenden Erfindung, die bekannten technischen Probleme im Hinblick auf die Anordnung von Messfühlern bzw. Sensoren in Abgassystemen zu überwinden. Insbesondere soll eine Position bzw. eine Art der Anordnung von Messfühlern vorgeschlagen werden, die einen dauerhaften Einsatz der Messfühler im Abgassystem mobiler Verbrennungskraftmaschinen gewährleisten. Dabei sollen möglichst genaue und präzise Messwertergebnisse lieferbar sein, die zur Regelung der Abgaskomponenten eingesetzt werden können. Weiterhin soll eine Abgasanlage vorgeschlagen werden, die eine besonders platzsparende und funktionstüchtige Anordnung eines Wabenkörpers mit einem Messfühler aufweist.

Diese Aufgaben werden gelöst durch einen Wabenkörper mit den Merkmalen des Patentanspruchs 1 bzw. durch eine Abgasanlage umfassend einen solchen Wabenkörper mit den Merkmalen des Patentanspruchs 20. Weitere vorteilhafte Ausgestaltungen sind in den jeweils abhängigen Patentansprüchen beschrieben. An dieser Stelle ist darauf hinzuweisen, dass die dort offenbarten Merkmale in beliebiger technologisch sinnvoller Weise miteinander kombiniert werden können.

Der erfindungsgemäße Wabenkörper hat für ein Fluid durchströmbare Kanäle, die sich zwischen zwei Stirnflächen erstrecken sowie mindestens einen Messfühler, der sich zumindest teilweise in den Wabenkörper hinein erstreckt. Zwischen einer ersten Stirnfläche und dem mindestens einen, ersten, Messfühler ist ein Teilvolumen des Wabenkörpers begrenzt. Der Wabenkörper zeichnet sich dadurch aus, dass dieser in dem ersten Teilvolumen eine geringere Aufnahmefähigkeit für Sauerstoff aufweist als in zumindest einem weiteren Teilvolumen.

Der Wabenkörper kann grundsätzlich aus unterschiedlichen Materialien hergestellt werden, insbesondere aus keramischem oder metallischem Material. Dabei ist bevorzugt ein solcher Körper zu verstehen, der eine Vielzahl von nebeneinander angeordnete, im wesentlichen sich zueinander parallel erstreckende Kanäle umfasst. Mit Kanal ist nicht zwingend eine geschlossene Strömungspassage gemeint, vielmehr umfasst dies auch andersartig geführte Strömungswege durch den Wabenkörper. Dabei ist überwiegend wesentlich, dass das Fluid beim Auftreffen auf eine Stirnfläche des Wabenkörpers in eine Vielzahl von Teilfluidströmungen aufgeteilt wird, die zumindest nahe der Stirnflächen, insbesondere für die ersten 2 mm bis 3 mm getrennt voneinander geführt werden. Unter Fluid sind grundsätzlich sowohl gasförmige als auch flüssige Substanzen zu subsumieren, vorzugsweise handelt es sich hierbei jedoch um einen Gasstrom, insbesondere um einen Abgasstrom einer mobilen Verbrennungskraftmaschine (Ottomotor oder Dieselmotor oder ähnliches).

Bei dem mindestens einen Messfühler kann es sich um jede bekannte Art eines Messfühlers handeln, der im Zusammenhang mit der Regelung bzw. Überwachung von Abgaskomponenten mobiler Verbrennungskraftmaschinen eingesetzt wird. Dies umfasst insbesondere Lambda-Sonden; HC-Messfühler, Temperatursensoren, Stickoxid-Messfühler oder ähnliches. Dieser mindestens eine Messfühler erstreckt sich zumindest teilweise in den Wabenkörper hinein. D. h. mit anderen Worten, dass der mindestens eine Messfühler an einer Mantelfläche des Wabenkörpers ansetzt und sich vorzugsweise in radialer Richtung nach innen erstreckt. Im Hinblick auf eine detaillierte Beschreibung der Anordnung selbst wird auf die nachfolgenden Erläuterungen verwiesen.

Mit der ersten Stirnfläche, die im Hinblick auf den Einsatz des Wabenkörpers im Abgassystem einer mobilen Verbrennungskraftmaschine die Gaseintrittsseite darstellt, und dem mindestens einen Messfühler wird ein erstes Teilvolumen begrenzt. Das Teilvolumen umfasst insbesondere alle Kanäle sowie deren Wandungen. Es erstreckt sich von der ersten Stirnfläche bis hin zu einer parallel dazu angeordneten Querschnittsfläche durch den Wabenkörper, die sich durch den der ersten Stirnfläche am nächsten angeordneten Punkt der Aufnahme des Messfühlers hindurch erstreckt. Folglich ist das erste Teilvolumen durch die erste Stirnfläche, diese soeben beschriebene Querschnittsfläche sowie die dazwischen liegende Mantelfläche des Wabenkörpers beschrieben.

Erfindungsgemäß hat der Wabenkörper in diesem ersten Teilvolumen eine geringere Aufnahmefähigkeit für Sauerstoff als in zumindest einem weiteren Teilvolumen. Somit ist zunächst einmal klar, dass der erste Messfühler sich im Inneren des Wabenkörpers befindet, also von dem bekannten Prinzip des vor- bzw. nachgeschalteten Messfühlers abrückt. Durch die Integration des Messfühlers wird erreicht, dass dieser nicht unmittelbar den extremen thermischen und dynamischen Beanspruchungen im Abgassystem einer Verbrennungskraftmaschine ausgesetzt wird. Auf diese Weise kann insbesondere eine vorzeitige thermische Alterung sowie die Gefahr des sogenannten "Wasserschlages" reduziert werden, da das Abgas zunächst auf den Wabenkörper auftrifft und erst anschließend mit dem Messfühler in Kontakt kommt. Im Hinblick auf den Einsatz eines solchen Messfühlers im Rahmen der OBD ist es von besonderer Bedeutung, dass der erste Messfühler, der beispielsweise eine Lambda-Sonde ist, mit einer Zusammensetzung des Abgasstromes in Kontakt kommt, welche noch Rückschlüsse auf das zugrunde liegende Kraftstoff-Luft-Gemisch zulässt. Deshalb wird hier vorgeschlagen, dass der Wabenkörper in dem Teilvolumen eine geringe Aufnahmefähigkeit für Sauerstoff aufweist. Dadurch wird erreicht, dass in diesem ersten Teilvolumen nicht ausreichend Sauerstoff zu Verfügung steht, der für eine nahezu 100 %ige Umsetzung der im Abgasstrom enthaltenen Schadstoffe benötigt wird. Folglich treten in diesem ersten Teilvolumen deutlich geringere Umsatzraten auf, beispielsweise kleiner 85 %, insbesondere kleiner 75 % und ggf. sogar weniger 50 %. Damit sind charakteristische Kennwerte des Abgases, die einen Hinweis auf das eingesetzte Kraftstoff-Luft-Gemisch zulassen, noch mit dem ersten Messfühler erfassbar.

Gemäß einer weiteren Ausgestaltung des Wabenkörpers weist das erste Teilvolumen zumindest teilweise eine erste Beschichtung auf. Eine solche Beschichtung ist bevorzugt auf den Kanalwänden appliziert und weist selbst eine Aufnahmefähigkeit für Sauerstoff auf. Die Beschichtung kann über den gesamten Querschnitt sowie die gesamte Länge des ersten Teilvolumens hinsichtlich der Beschichtungsdicke, der Beschichtungsart, der Beschichtungsöberfläche oder weiteren Parametern gleich oder unterschiedlich sein. Es ist auch möglich, dass in dem Teilvolumen Bereiche existieren, die keine Beschichtung aufweisen. Als Beschichtung kommen beispielsweise auch Trägerschichten für katalytisch aktive Materialien, wie beispielsweise Washcoat, in Betracht.

Weiter wird vorgeschlagen, dass in dem ersten Teilvolumen ein Austausch von Fluidströmungen benachbarter Kanäle gewährleistet ist. Das bedeutet mit anderen Worten, dass die nahe der Stirnfläche des Wabenkörpers gebildeten Teilfluidströmungen im ersten Teilvolumen miteinander zumindest teilweise vermischt bzw. vermengt werden. Dazu ist es erforderlich, dass die benachbart zueinander angeordneten Kanäle Mittel vorsehen, die einen solchen Austausch von Fluidströmungen ermöglichen.

In diesem Zusammenhang wird bevorzugt vorgeschlagen, dass zumindest in dem ersten Teilvolumen Durchlässe in den Kanalwänden vorgesehen sind, insbesondere mit einem mittleren Durchmesser im Bereich von 2 mm bis 10 mm. Die Durchlässe können grundsätzlich alle erdenklichen Formen umfassen, insbesondere runde, eckige, ovale oder ähnliche Löcher, Schlitze, Perforationen oder dergleichen. Im Hinblick auf die vielfältige Ausgestaltung solcher Durchlässe ist unter einem mittleren Durchmesser ein Mittelwert des Abstandes der gegenüber liegenden Berandungen der Durchlässe gemeint, der zwischen der maximalen und der minimalen Erstreckung liegt. Dabei sei darauf hingewiesen, dass die Durchlässe über das Teilvolumen nicht gleichmäßig ausgeführt sein müssen, vielmehr besteht die Möglichkeit, die Durchlässe im Hinblick auf die Art, die Größe oder aber die Verteilung in dem ersten Teilvolumen zu variieren.

Zur Gewährleistung eines Austausches von Fluidströmungen benachbarter Kanäle wird weiter auch vorgeschlagen, dass die Kanäle zumindest in dem ersten Teilvolumen Mikrostrukturen aufweisen, die bevorzugt zur Umlenkung des Fluides in eine Richtung quer zu einer Achse des Wabenkörpers dienen. Unter einer Mikrostruktur sind insbesondere solche Strukturen zu verstehen, die sich ausgehend von den Kanalwänden in innere Bereiche des Kanals oder hin zu benachbarten Kanalwänden erstrecken. Diese Mikrostrukturen haben dabei bevorzugt eine Höhe, die kleiner als die Höhe des Kanals selbst ist. Als Mikrostrukturen kommen Noppen, Prägungen, Leitflächen, Flügelchen, Rillen, Buckel oder ahnliches in Betracht.

Bevorzugt werden mit derartigen Mikrostrukturen Druckunterschiede in benachbarten Kanälen generiert, die ein Strömen des Teilfluidstromes von einem Kanal hin zum benachbarten bewirken. Durch eine geschickte Anordnung der Mikrostrukturen zueinander wird eine gleichmäßige Vermengung bzw. Vermischung des Fluides ermöglicht. Das hat zur Folge, dass beispielsweise Gebiete mit besonders hohen Konzentrationen, wie sie beispielsweise auch einzeln in Abgasströmen auftreten können, vermieden werden. Vielmehr wird eine nahezu gleichmäßige Konzentrationsverteilung eines Schadstoffes bzw. einer Komponente des Fluids über nahezu den gesamten Querschnitt des Wabenkörpers bereitgestellt. Wird ein dermaßen vermengter bzw. vermischter Fluidstrom mit dem nachgeordneten Messfühler in Kontakt gebracht, so lassen sich exaktere Aussagen über die Zusammensetzung des Fluidstromes vornehmen.

Gemäß einer weiteren Ausgestaltung liegt das erste Teilvolumen im Bereich kleiner 30 %, insbesondere im Bereich von 10 % bis 25 % des Gesamtvolumens des Wabenkörpers. Mit Gesamtvolumen ist in diesem Fall das Volumen des Wabenkörpers gemeint, welches durch die beiden Stirnflächen sowie die Mantelfläche begrenzt ist und sowohl die Kanäle als auch deren Wände bzw. Beschichtungen etc. umfasst. Dabei sei an dieser Stelle darauf hingewiesen, dass es sich hierbei nicht zwangsläufig um eine zylindrische Gestalt des Wabenkörpers handeln muss. Vielmehr sind ovale, konusförmige, eckige oder ähnliche Formen von Wabenkörpern bekannt. Hat der Wabenkörper ein Gehäuse, so ist das Gehäuse dem Gesamtvolumen des Wabenkörpers nicht zuzurechnen.

Weiter wird vorgeschlagen, dass das erste Teilvolumen eine Länge ausgehend von der ersten Stirnfläche von 10 mm bis 40 mm hat. Diese Länge ist ggf. ausreichend, um einerseits eine genügende Kontaktfläche für im Abgasstrom enthaltenen Wasserdampf bzw. dort mitgeführtes Wasser bereitzustellen und gleichzeitig (insbesondere bei einer Vorsehung von Durchlässen) eine hinreichende Durchmischung des Abgasstroms zu bewirken. Dabei bezieht sich diese Längenaufgabe bevorzugt auf Wabenkörper, die insgesamt eine Länge von über 100 mm aufweisen.

Bevorzugt wird auch vorgeschlagen, dass ein einzelner Messfühler vorgesehen ist, wobei dieser eine Lambda-Sonde ist. D. h. mit anderen Worten, dass hier ein Wabenkörper angegeben ist, der nur einen einzelnen Messfühler aufweist, der als Lambda-Sonde ausgebildet ist, mit dem aber auch gleichzeitig eine OBD durchführbar ist. Diese einzelne Lambda-Sonde ermöglicht beispielsweise die Feststellung von unverbrannten Kohlenwasserstoffen, die insbesondere nach einem Wiederstart bzw. einem Neustart der mobilen Verbrennungskraftmaschine auftreten (sogenannter "Kaltstart").

Gemäß einer weiteren Ausgestaltung hat der Wabenkörper ausgehend von seiner Mantelfläche eine sich radial in Richtung seiner Achse erstreckende Ausnehmung zur Aufnahme des Messfühlers, wobei diese bevorzugt eine maximale Erstreckung im Bereich von 15 mm bis 35 mm hat und/oder eine Tiefe im Bereich von 15 mm bis 40 mm aufweist.

Mit einer "Mantelfläche" ist insbesondere die Umhüllende des Wabenkörpers gemeint, die zwischen den beiden Stirnflächen angeordnet ist. Die "Achse" des Wabenkörpers betrifft insbesondere eine Zentrumsachse, die sich bevorzugt durch die Mittelpunkte der beiden Stirnflächen hindurch erstreckt. Die "Ausnehmung" bzw. deren Zentrumsachse erstreckt sich nun ausgehend von der Mantelfläche bevorzugt in radialer Richtung hin zur Achse. An dieser Stelle sei zwar darauf hingewiesen, dass diese Ausnehmung auch windschief bzw. schräg zur Achse des Wabenkörpers angeordnet sein kann, die radiale Erstreckung stellt jedoch eine hier bevorzugte Ausführungsform dar, da auf diese Weise ein relativ tiefes Eindringen des Messfühlers möglich ist.

Um zu gewährleisten, dass sich der Messfühler ausreichend weit in innere Bereiche des Wabenkörpers hinein erstreckt, gleichzeitig jedoch keinen unerwünscht großen Strömungswiderstand darstellt, sind die angegebenen Dimensionen einzuhalten. Die "maximale Erstreckung" ist dabei im wesentlichen in einem Querschnitt der Ausnehmung angeordnet und beschreibt den Abstand der am weitesten entfernt zueinander angeordneten, gegenüber liegenden Punkte der Ausnehmung. Die "Tiefe" erstreckt sich ausgehend von der Mantelfläche radial einwärts und beschreibt in dieser Richtung die Dimension der Ausnehmung. Die Anzahl derartiger Ausnehmungen in dem Wabenkörper ist unter Berücksichtigung der Anzahl der eingesetzten Messfühler zu wählen. Unter Umständen ist es jedoch auch möglich, mehrere Messfühler in einer Ausnehmung anzuordnen.

Außerdem wird auch vorgeschlagen, dass die Ausnehmung eine ovalzylindrische, viereckige oder sich konusförmig in Richtung der Achse verengende Form hat. Zur Herstellung derartiger Ausnehmungen bei Wabenkörpern, die eine Mehrzahl zumindest teilweise strukturierter Blechfolien aufweisen, sei insbesondere auf den Offenbarungsinhalt der WO 02/075126 verwiesen, deren Inhalt hiermit vollständig zum Gegenstand der Beschreibung gemacht wird, wobei zur insbesondere zur näheren Erläuterung der Erfindung auf deren Offenbarungsinhalt voll Bezug genommen werden kann.

Zusätzlich wird vorgeschlagen, dass die Ausnehmung wenigstens teilweise von einem Rand umgeben ist, welcher keinen Austausch von benachbarten Strömungen zulässt, insbesondere keine Durchlässe aufweist, wobei dieser Rand bevorzugt eine Breite im Bereich von 1 mm bis 5 mm hat. Die Ausgestaltung der Ausnehmung mit einem solchen Rand hat zur Folge, dass deren äußere Gestalt nicht durch besonders zerklüftete Kanalwände begrenzt ist. Dies könnte dazu führen, dass besonders filigrane Teilbereiche der Kanalwände den extremen Umgebungsbedingungen frei ausgesetzt sind. Infolge die dort herrschenden Druckschwankungen können zu einem Ablösen Teilbereiche bzw. zu Rissen führen, die sich weiter durch die Kanalwand fortpflanzen. Durch die Vorsehung des Randes sind in der näheren Umgebung der Ausnehmung stabile Kanalrandbereiche gegeben, so dass ein langzeitiger Einsatz derartiger Wabenkörper gewährleistet ist.

Weiter wird ein Wabenkörper vorgeschlagen, wobei ein zweiter Messfühler vorgesehen ist, der zwischen einem nahe der ersten Stirnfläche angeordneten ersten Messfühler, der als Lambda-Sonde ausgeführt ist, und der zweiten Stirnfläche angebracht ist, wobei zwischen dem zweiten Messfühler und dem ersten Messfühler ein zweites Teilvolumen und zwischen dem zweiten Messfühler und der zweiten Stirnfläche ein drittes Teilvolumen gebildet ist.

Insofern weist der Wabenkörper zwei Messfühler auf, die zumindest teilweise in andere Bereiche hineinragen. Die Messfühler, die bevorzugt jeweils in einer Querschnittsebene parallel zu mindestens einer Stirnfläche des Wabenkörper angeordnet sind, begrenzen dabei verschiedene Teilvolumen des Wabenkörpers. Bevorzugt hat dabei der erste Messfühler die Funktion, bestimmte charakteristische Kennwerte zu generieren, die für das anströmende Fluid aussagekräftig sind. Das bedeutet, dass sich anhand der mit dem ersten Messfühler gewonnenen Daten Erkenntnisse auf die Zusammensetzung, Konzentrationsunterschiede, Temperaturen etc. gewinnen lassen. Der zweite Messfühler wird nun insbesondere dazu eingesetzt, die Funktionalität des Wabenkörpers bzw. dessen Beschichtung messtechnisch zu erfassen. Dabei werden beispielsweise dieselben Parameter, die mit dem ersten Messfühler erfasst wurden, ebenfalls aufgenommen und in Bezug zueinander gesetzt. Der Anstieg bzw. das Abfallen dieses Kennwertes lässt demnach Rückschlüsse auf die beispielsweise katalytische Aktivität des Wabenkörpers zu. Es ist jedoch auch möglich, dass beide Messfühler verschiedene Parameter des Fluid- bzw. Abgasstromes beobachten.

In diesem Zusammenhang wird weiter vorgeschlagen, dass in dem zweiten Teilvolumen wenigstens teilweise eine Beschichtung vorgesehen ist, die gegenüber der ersten Beschichtung im ersten Teilvolumen eine erhöhte Aufnahmefähigkeit von Sauerstoff hat. Demnach bildet das zweite Teilvolumen bevorzugt den Bereich des Wabenkörpers, in dem eine besonders effektive Umsetzung von Schadstoffen eines Abgasstromes stattfindet. Dies erfolgt bevorzugt mit einer Effektivität oberhalb von 99 %. Die gesteigerte Aufnahmefähigkeit von Sauerstoff der zweiten zu oxidierenden Beschichtung gewährleistet, dass die Schadstoffe in ausreichendem Maße mit ihrem Reaktionspartner in Verbindung gebracht werden.

Außerdem wird auch vorgeschlagen, dass das dritte Teilvolumen wenigstens teilweise eine dritte Beschichtung aufweist, die gegenüber wenigstens dem ersten Teilvolumen und/oder dem zweiten Teilvolumen eine geringere katalytische Aktivität hat. Damit ist insbesondere gemeint, dass in diesem dritten Teilvolumen eine geringere Menge katalytisch aktiven Materials vorgesehen ist. Als solche Katalysatoren werden insbesondere Platin, Rhodium oder Seltenerden (also insbesondere auch schwach basische Oxide der seltenen Erdmetalle) eingesetzt.

Nach einer weiteren Ausgestaltung des Wabenkörpers gewährleistet zumindest das zweite Teilvolumen und/oder das dritte Teilvolumen einen Austausch von Fluidströmungen benachbarter Kanäle. Unter Umständen ist es vorteilhaft, im zweiten Teilvolumen keinen Austausch von Fluidströmungen benachbarter Kanäle zuzulassen. Dies ist beispielsweise dann der Fall, wenn der erste Messfühler und der zweite Messfühler jeweils miteinander zu vergleichende Insbesondere ist es vorteilhaft, dass der zweite Messfühler ein Sensor zur Überwachung von Stickoxid-Anteilen im Fluidstrom ist. Es ist bereits bekannt, z. B. im Abgassystem eines Diesel- oder Magermotors einen NOₓ-Speicher vorzusehen, der die im Betrieb erzeugten Stickoxide über einen gewissen Zeitraum speichern kann. Bevor seine Speicherkapazität erschöpft ist, wird ein solcher NOₓ-Speicher regeneriert, indem unverbrannte Kohlenwasserstoffe dem Abgassystem zugeführt werden. Diese Kohlenwasserstoffe reagieren, ggf. unterstützt durch geeignete Katalysatoren, mit den gespeicherten Stickoxiden, wobei in der Regel die Produkte Kohlendioxid, Stickstoff und Wasser entstehen. Evtl. überschüssig zugeführte oder nicht zur Reaktion mit den Stickoxiden gelangende Kohlenwasserstoffe werden im Abgassystem bzw. im Wabenkörper mit dem im Abgas enthaltenem Restsauerstoff oxidiert, so dass daraus ggf. nur Kohlendioxid und Wasser hervorgeht.

Die katalytische Umsetzung kann in einer katalytisch aktiven Beschichtung des NOₓ-Speichers selbst oder in einem nachgeschalteten Oxidationskatalysator erfolgen. Wie bereits vorstehend ausgeführt, kann der Wabenkörper selbst unterschiedliche Beschichtungen aufweisen, beispielsweise eine Oxidationsbeschichtung mit einer hohen Sauerstoffspeicherfähigkeit oder einer NOₓ-speicherfähigen Beschichtung. Die Überwachung der NOₓ-Speicherfähigkeit erlaubt insbesondere Aussagen über die Funktionsweise des Wabenkörpers bzw. der Verbrennung in der Verbrennungskraftmaschine im betriebswarmen Zustand.

Weiter wird noch ein Wabenkörper vorgeschlagen, der mit zumindest teilweise strukturierten Blechfolien gebildet ist, welche die Kanäle begrenzen. Bevorzugt weist der Wabenkörper dabei sowohl glatte als auch strukturierte Blechfolien auf, die aufeinander gestapelt und miteinander gewunden sind. Die Verlaufsformen der Blechfolien können spiralförmig, S-förmig oder in einer ähnlichen geschlungenen Anordnung vorliegen. Diese Wabenkörper haben eine Zelldichte, die bevorzugt im Bereich von 200 bis 1.000 cpsi ("cells per square inch") liegt, insbesondere im Bereich von 400 bis 800 cpsi. Die Blechfoliendicke beträgt dabei Messwerte generieren sollen. Um sicherzustellen, dass die gleichen Fluidströmungen, die an dem ersten Messfühler vorbeigeführt wurden, auch an dem zweiten Messfühler vorbeiströmen, ist eine Quermischung von Teilfluidströmungen zu unterbinden. Für den Fall, dass ein solcher Vergleich nicht vorgenommen wird, ist eine Vermischung von Teilfluidströmungen auch im zweiten Teilbereich unter Umständen vorteilhaft.

Nach einer Weiterbildung des Wabenkörpers ist der zweite Messfühler mit einem Abstand von der zweiten Stirnfläche positioniert, welche im Bereich von 10 mm bis 30 mm liegt. Der hier beschriebene Abstand stellt eine Art Mindestabstand dar, der ausgehend von der zweiten Stirnfläche, die üblicherweise im Abgasstrang eines Automobils die Gasaustrittsseite bezeichnet, gewährleistet sein sollte. Das hat den Vorteil, dass bei der Feststellung einer Grenzwertüberschreitung bzw. - unterschreitung an der zweiten Messstelle noch ein drittes Teilvolumen vorgesehen ist, das ggf. noch die Schadstoffe solange umwandelt, bis die Motorsteuerung eine Veränderung des Brennstoff-Luft-Gemisches vorgenommen hat, um die Funktionalität des Wabenkörpers wieder herzustellen. Das hat seinen Ursprung unter anderem in der Tatsache, dass sich die Funktionalität eines Wabenkörpers zumeinst zeitverzögert in verschiedenen Bereichen ändert. Da das Abgas beispielsweise immer von einer Stirnfläche her eintritt, ist dieser Bereich des Wabenkörpers in der Regel zuerst beeinträchtigt. Hierbei kann es sich beispielsweise um die Speicherfähigkeit von Stickoxiden, der Anlagerung von Ruß oder ähnlichen Komponenten handeln. Dieses "Fehlverhalten" setzt sich nun mit der Zeit in innere Bereiche fort, bis es schließlich auch an der zweiten Messstelle die Veränderung wahrnehmbar ist. Der Mindestabstand bzw. die Größe des dritten Teilvolumens stellt demnach eine Sicherheit dagegen dar, dass die vom Gesetzgeber vorgeschriebenen Grenzwerte auch bei plötzlichem Versagen des Wabenkörpers (z.B. als Katalysator-Trägerkörper) noch eingehalten werden. vorzugsweise weniger als 100 µm, insbesondere in einem Bereich von 20 bis 80 µm. Als Material der Blechfolien werden temperatur- und korrosionsfeste Aluminium/Chrom-Legierungen bevorzugt.

Gemäß einer weiteren Ausgestaltung des Wabenkörpers ist dieser von einem Gehäuse umgeben, welches wenigstens eine Durchführung aufweist, die zur gasdichten Fixierung des mindestens einen Messfühlers dient. Das Gehäuse gewährleistet im wesentlichen die strukturelle Integrität des Wabenkörpers. Die Kanalwände bzw. Blechfolien sind mit dem Gehäuse bevorzugt unlösbar verbunden, wobei damit gemeint ist, dass diese nur unter Beschädigung bzw. Zerstörung des Wabenkörpers bzw. des Gehäuses voneinander wieder trennbar sind. Als Gehäuse wird ebenfalls ein metallisches Mantelrohr vorgeschlagen, wobei die Kanalwände mit dem Gehäuse bevorzugt verschweißt oder verlötet sind. Die Durchführung wird dabei im wesentlichen über die Ausnehmung positioniert, so dass der mindestens eine Messfühler von außen hindurchgeführt werden kann. Zur gasdichten Ausführung der Durchführung können besondere Dichtungsmittel vorgesehen sein. Es ist auch möglich, dass ein zusätzliches Gehäuse bzw. eine Hülse auf das Gehäuse aufgesetzt bzw. geschweißt wird, die ebenfalls oberhalb der Durchführung ausgerichtet ist.

Außerdem wird noch eine Abgasanlage vorgeschlagen, die einen Leitungsabschnitt zur Positionierung von Komponenten zur Abgasnachbehandlung umfasst, wobei wenigstens ein Wabenkörper entsprechend den vorstehenden Ausführungen vorgesehen ist. Der Leitungsabschnitt hat dabei eine Längsachse und einen Unterboden, wobei eine die Längsachse und den tiefsten Punkt des Unterbodens schneidende Sekundärachse gebildet ist, und der mindestens eine Messfühler in einem Winkelbereich von 270° positioniert ist, der gegenüber liegend dem tiefsten Punkt des Unterbodens angeordnet ist.

Mit Abgasanlage ist insbesondere eine solche von mobilen Verbrennungskraftmaschinen gemeint, also von Automobilen, Motorrädern, Lastkraftwagen oder ähnlichen Fahrzeugen. Die Abgasanlage ist üblicherweise mit der Verbrennungskraftmaschine verbunden und weist eine Öffnung hin zur Umgebung auf, aus der das erzeugte Abgas hinausströmt, welches zuvor behandelt wurde. In einem Leitungsabschnitt, der bevorzugt verbreitert ausgebildet ist, sind ggf. eine Mehrzahl von unterschiedlichen Komponenten zur Abgasnachbehandlung angeordnet, wie beispielsweise Filterelemente, Adsorber, Heizelemente, Partikelabscheider, Katalysatoren, etc.. Ggf. kann diese Abgasanlage mit zusätzlichen Düsen, Sonden oder Zuführleitungen für Reduktionsmittel oder Oxidationsmittel ausgeführt sein.

Die Anordnung des mindestens einen Messfühlers wird nun mit Bezug auf die Längsachse und den tiefsten Punkt des Unterbodens des Leitungsabschnittes beschrieben. Hier wird nun ein besonders breiter Winkelbereich, nämlich von 270°, vorgeschlagen. Bisher wurden derartige Messfühler nur in einem sehr begrenzten. Winkelbereich gegenüber liegend von dem tiefsten Punkt des Unterbodens angeordnet. Dies erfolgte insbesondere mit Rücksicht auf das im Leitungsabschnitt ggf. entstehende Kondenswasser in Nähe des Unterbodens, der eine negative Auswirkung auf das Messergebnis mit dem mindestens einen Messfühler hat. Aufgrund der Ausgestaltung der Ausnehmung sowie der Vorsehung von Durchlässen wird diese Gefahr der Ansammlung von Flüssigkeiten jedoch deutlich reduziert. Deshalb kann hier in einem besonders breiten Winkelbereich variiert werden.

In diesem Zusammenhang ist es ganz besonders vorteilhaft, dass der mindestens eine Messfühler in einem Winkelbereich von 45° positioniert ist, welcher sich von einer senkrecht zur Sekundärachse und durch die Längsachse erstreckende Tertiärachse hin zum tiefsten Punkt des Unterbodens erstreckt. Damit ist insbesondere gemeint, dass der mindestens eine Messfühler unterhalb einer Waagerechten durch die Längsachse des Leitungsabschnittes angeordnet ist. Nähere Ausführungen zu dieser Anordnung des mindestens einen Messfühler wird mit Bezug auf die Figuren vorgenommen.

Die Erfindung wird nachfolgend anhand der Figuren näher erläutert. Dabei zeigen die Figuren besonders bevorzugte Ausführungsformen, auf die sich die Erfindung jedoch nicht begrenzen lässt.

### Es zeigen:

- Fig. 1: Schematisch einen Längsschnitt durch eine erste Ausführungsform des Wabenkörpers;
- Fig. 2: eine schematische Detailansicht einer weiteren Ausführungsform des Wabenkörpers im Querschnitt; und
- Fig.3: schematisch die Anordnung einer Ausführungsform des Wabenkörpers in einer Abgasanlage.

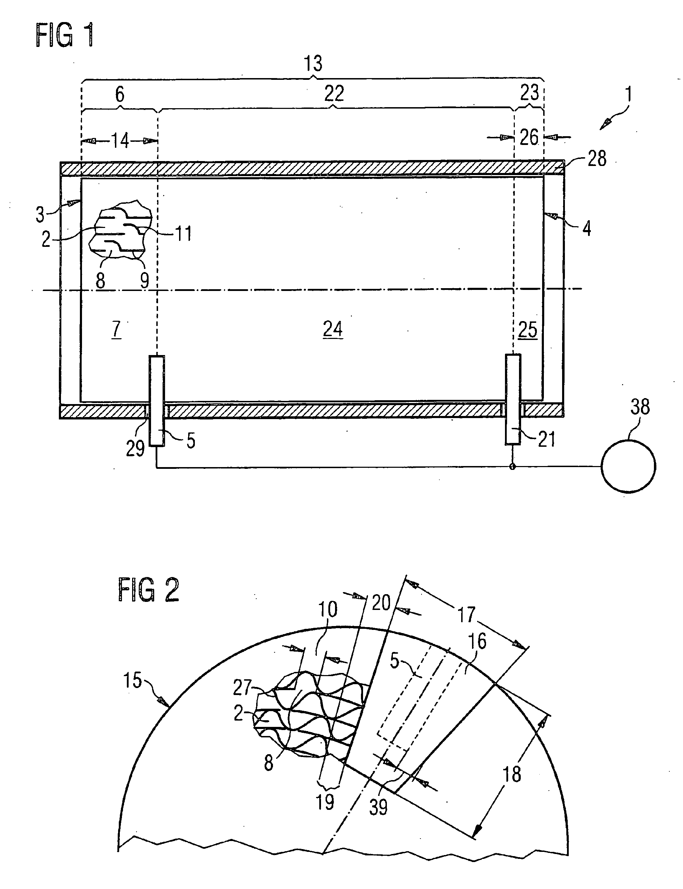

Fig. 1 zeigt schematisch und in einem Querschnitt eine erste Ausführungsform des erfindungsgemäßen Wabenkörpers 1 mit für ein Fluid durchströmbaren Kanälen 2, die sich zwischen zwei Stirnflächen 3, 4 erstrecken. Der Wabenkörper 1 umfasst ein Gehäuse 28, durch das sich zwei Messfühler 5, 21 via Durchführungen 29 in innere Bereiche des Wabenkörpers 1 hinein erstrecken. Beide Messfühler 5, 21 sind mit einer Messdatenerfassung 38 verbunden, die bevorzugt mit der Motorsteuerung bzw. einer nicht dargestellten Verbrennungskraftmaschine zusammenwirkt.

Der Wabenkörper 1 weist ein Gesamtvolumen 13 auf, welches in ein erstes Teilvolumen 6, ein mittig angeordnetes, zweites Teilvolumen 22 sowie ein drittes Teilvolumen 23 unterteilt ist. Die Teilvolumina 6, 22, 23 werden im wesentlichen durch die Position der Messfühler 5, 21 bzw. die beiden Stirnflächen 3, 4 definiert. Das erste Teilvolumen 6 hat eine Länge 14 ausgehend von der ersten Stirnfläche 3 bis zu einer Querschnittsebene durch den Wabenkörper 1, die im wesentlichen durch die Lage bzw. Position des ersten Messfühlers 5 definiert wird. Das zweite Teilvolumen 22 ist zwischen dem ersten Messfühler 5 und dem zweiten Messfühler 21 angeordnet und wird wiederum durch deren Lage definiert. Das dritte Teilvolumen 23 wird durch die Lage des zweiten Messfühlers und die zweite Stirnfläche 4 definiert, so dass ein Abstand 26 gebildet ist.

Der Wabenkörper 1 weist in den Teilvolumen 6, 22, 23 jeweils unterschiedliche Beschichtungen auf. Im ersten Teilvolumen 6 ist eine erste Beschichtung 7 vorgesehen, die eine geringe Sauerstoffspeicherfähigkeit aufweist. Im zweiten Teilvolumen 22 ist eine zweite Beschichtung 24 vorgesehen, die gegenüber der Beschichtung 7 im ersten Teilvolumen 6 eine erhöht Sauerstoffspeicherfähigkeit aufweist. Im dritten Teilvolumen 23 ist eine dritte Beschichtung 25 vorgesehen, die sich gegenüber der Beschichtung 24 durch eine reduzierte katalytische Aktivität auszeichnet.

Der Wabenkörper 1 weist eine Vielzahl von im wesentlichen parallel zueinander angeordneten Kanälen 2 auf, die sich hier bevorzugt parallel zu einer Achse 12 des Wabenkörpers 1 durch dessen Inneres hindurch fortpflanzen. Bei der dargestellten Ausführungsform sind die Kanäle 2 im ersten Teilvolumen 6 so ausgebildet, dass diese einen Austausch von Fluidströmungen benachbarter Kanäle 2 gewährleisten. Hierzu sind in den Kanalwänden 9 Durchlässe 8 und Mikrostrukturen 11 vorgesehen.

Fig. 2 zeigt schematisch und in einer Schnittansicht eine weitere Ausführungsform des Wabenkörpers 1, wobei dieser mit glatten und strukturierten Blechfolien 27 gebildet ist. Die Blechfolien 27 sind mit Durchlässen 8 ausgestattet, die einen mittleren Durchmesser 10 im Bereich von 2 mm bis 10 mm aufweisen. Die zumindest teilweise strukturierten Blechfolien 27 begrenzen wiederum die Kanäle 2.

Der Wabenkörper 1 hat ausgehend von seiner Mantelfläche 15 eine sich radial in Richtung seiner Achse 12 erstreckende Ausnehmung 16 zur Aufnahme des Messfühlers 5, wobei diese eine maximale Erstreckung 17 und eine Tiefe 18 aufweist. Dabei wird der Messfühler 5 so angeordnet, dass eine Distanz bis hin zur Berandung der Ausnehmung 16 gewährleistet ist, die bevorzugt im Bereich von 3 bis 20 mm liegt. Um die Ausnehmung 16 herum ist ein Rand 19 vorgesehen, der eine Breite 20 aufweist, die bevorzugt 1 mm bis 5 mm beträgt. Innerhalb dieses Randes 19 ist kein Austausch von benachbarten Strömungen möglich, da die Blechfolien 27 in diesem Abschnitt bzw. Rand 19 keine Durchlässe 8 und/oder Mikrostrukturen 11 aufweisen.

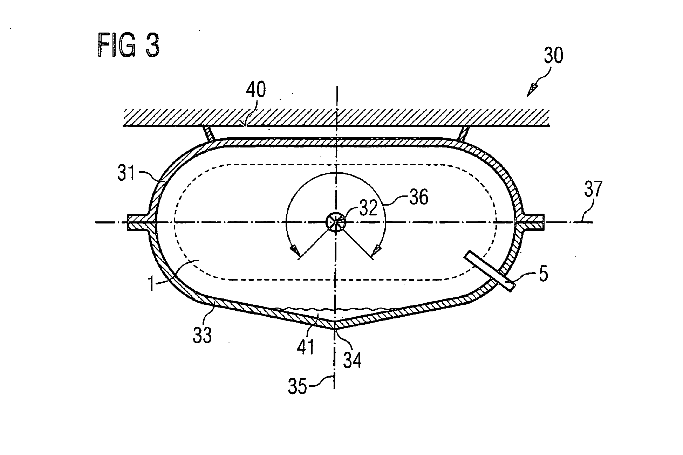

Fig. 3 zeigt schematisch die Anordnung einer Abgasanlage 30 - befestigt an einer Anlagefläche 40, wie sie beispielsweise an einem Automobil vorgesehen sein kann. Die Abgasanlage 30 umfasst einen Leitungsabschnitt 31 zur Positionierung von Komponenten zur Abgasnachbehandlung, wobei hier ein Wabenkörper 1 angedeutet ist. Der Leitungsabschnitt 31 hat eine Längsachse 32 und einen Unterboden 33, wobei eine die Längsachse 32 und den tiefsten Punkt 34 des Unterbodens 33 schneidende Sekundärachse 35 gebildet ist. Der Messfühler 5 ist in einem Winkelbereich 36 von 270° positioniert, der gegenüberliegend dem tiefsten Punkt 34 des Unterbodens 33 angeordnet ist. Bei der hier dargestellten Ausführungsform ist der Messfühler 5 sogar in einem Winkelbereich von 45° positioniert, welcher sich von einer senkrecht zur Sekundärachse 35 und durch die Längsachse 32 erstreckenden Tertiärachse 37 hin zum tiefsten Punkt 34 des Unterbodens 33 erstreckt. Die Anordnung des Messfühlers 5 in dem Winkelbereich 36 hat zur Folge, dass dieser nicht mit einer Flüssigkeit 41, die sich nahe des tiefsten Punktes 34 des Unterbodens 33 ansammelt, in Kontakt kommt. Gleichzeitig ist es jedoch möglich, den Leitungsabschnitt 31 nahe an der Anlagefläche 40 zu positionieren, da der dem tiefsten Punkt 34 genau gegenüber liegende Bereich nicht zwangsläufig zur Positionierung des Messfühlers 5 eingesetzt werden muss.

### Bezugszeichenliste

- 1: Wabenkörper
- 2: Kanal
- 3: Erste Stirnfläche
- 4: Zweite Stirnfläche
- 5: Erster Messfühler
- 6: Erstes Teilvolumen
- 7: Erste Beschichtung
- 8: Durchlass
- 9: Kanalwand
- 10: Durchmesser
- 11: Mikrostruktur
- 12: Achse
- 13: Gesamtvolumen
- 14: Länge
- 15: Mantelfläche
- 16: Ausnehmung
- 17: Erstreckung
- 18: Tiefe
- 19: Rand
- 20: Breite
- 21: Zweiter Messfühler
- 22: Zweites Teilvolumen
- 23: Drittes Teilvolumen
- 24: Zweite Beschichtung
- 25: Dritte Beschichtung
- 26: Abstand
- 27: Blechfolie
- 28: Gehäuse
- 29: Durchführung
- 30: Abgasanlage
- 31: Leitungsabschnitt
- 32: Längsachse
- 33: Unterboden
- 34: Tiefster Punkt
- 35: Sekundärachse
- 36: Winkelbereich
- 37: Tertiärachse
- 38: Messdatenerfassung
- 39: Distanz
- 40: Anlagefläche
- 41: Flüssigkeit

## Patentansprüche

1. Wabenkörper (1) mit für ein Fluid durchströmbaren Kanälen (2), die sich zwischen zwei Stirnflächen (3, 4) erstrecken und mit mindestens einem Messfühler (5, 21), der sich zumindest teilweise in den Wabenkörper (1) hinein erstreckt, wobei zwischen einer ersten Stirnfläche (3) und dem mindestens einen, ersten Messfühler (5) ein erstes Teilvolumen (6) des Wabenkörpers (1) begrenzt ist, **dadurch gekennzeichnet, dass** der Wabenkörper (1) in dem ersten Teilvolumen (6) eine geringere Aufnahmefähigkeit für Sauerstoff aufweist als in zumindest einem weiteren Teilvolumen (22, 23).

2. Wabenkörper (1) nach Anspruch 1, **dadurch gekennzeichnet, dass** das erste Teilvolumen (6) zumindest teilweise eine erste Beschichtung (7) aufweist.

3. Wabenkörper (1) nach Anspruch 1 oder 2, **dadurch gekennzeichnet, dass** in dem ersten Teilvolumen (6) ein Austausch von Fluidströmungen benachbarter Kanäle (2) gewährleistet ist.

4. Wabenkörper (1) nach Anspruch 3, **dadurch gekennzeichnet, dass** zumindest in dem ersten Teilvolumen (6) Durchlässe (8) in den Kanalwänden (9) vorgesehen sind, insbesondere mit einem mittleren Durchmesser (10) im Bereich von 2 mm bis 10 mm.

5. Wabenkörper (1) nach Anspruch 3 oder 4, **dadurch gekennzeichnet, dass** die Kanäle (2) zumindest in dem ersten Teilvolumen (6) Mikrostrukturen (11) aufweisen, die bevorzugt zur Umlenkung des Fluides in eine Richtung quer zu einer Achse (12) des Wabenkörpers (1) dienen.

6. Wabenkörper (1) nach einem der vorhergehenden Ansprüche, **dadurch gekennzeichnet, dass** das erste Teilvolumen (6) im Bereich kleiner 30 %, insbesondere im Bereich von 10 % bis 25 %, des Gesamtvolumens (13) des Wabenkörpers (1) liegt.

7. Wabenkörper (1) nach einem der vorhergehenden Ansprüche, **dadurch gekennzeichnet, dass** das erste Teilvolumen (6) eine Länge (14) ausgehend von der ersten Stirnfläche (3) von 10 mm bis 40 mm hat.

8. Wabenkörper (1) nach einem der vorhergehenden Ansprüche, **dadurch gekennzeichnet, dass** ein einzelner Messfühler (5) vorgesehen ist, wobei dieser eine Lambda-Sonde ist.

9. Wabenkörper (1) nach einem der vorhergehenden Ansprüche, **dadurch gekennzeichnet, dass** der Wabenkörper (1) ausgehend von seiner Mantelfläche (15) eine sich radial in Richtung seiner Achse (12) erstreckende Ausnehmung (16) zur Aufnahme des Messfühlers (5, 21) hat, wobei diese bevorzugt eine maximale Erstreckung (17) im Bereich von 15 mm bis 35 mm hat und/oder eine Tiefe (18) im Bereich von 15 mm bis 40 mm aufweist.

10. Wabenkörper (1) nach Anspruch 9, **dadurch gekennzeichnet, dass** die Ausnehmung (16) eine oval-zylindrische, viereckige oder sich konusförmig in Richtung der Achse (12) verengende Form hat.

11. Wabenkörper (1) nach Anspruch 9 oder 10, **dadurch gekennzeichnet, dass** die Ausnehmung (16) wenigstens teilweise von einem Rand (19) umgeben ist, welcher keinen Austausch von benachbarten Strömungen zulässt, insbesondere keine Durchlässe (8) aufweist, wobei dieser Rand (19) bevorzugt eine Breite (20) im Bereich von 1 mm bis 5 mm hat.

12. Wabenkörper (1) nach einem der vorhergehenden Ansprüche, **dadurch gekennzeichnet, dass** ein zweiter Messfühler (21) vorgesehen ist, der zwischen einem nahe der ersten Stimfläche (3) angeordneten ersten Messfühler (5), der als Lambda-Sonde ausgeführt ist, und der zweiten Stirnfläche (4) angebracht ist, wobei zwischen dem zweiten Messfühler (21) und dem ersten Messfühler (5) ein zweites Teilvolumen (22) und zwischen dem zweiten Messfühler (21) und der zweiten Stirnfläche (4) ein drittes Teilvolumen (23) gebildet ist.

13. Wabenkörper (1) nach Anspruch 12, **dadurch gekennzeichnet, dass** in dem zweiten Teilvolumen (22) wenigstens teilweise eine zweite Beschichtung (24) vorgesehen ist, die gegenüber einer ersten Beschichtung (7) im ersten Teilvolumen (6) eine erhöhte Aufnahmefähigkeit von Sauerstoff hat.

14. Wabenkörper (1) nach Anspruch 12 oder 13, **dadurch gekennzeichnet, dass** das dritte Teilvolumen (23) wenigstens teilweise eine dritte Beschichtung (25) aufweist, die gegenüber wenigstens dem ersten Teilvolumen (6) und/oder dem zweiten Teilvolumen (22) eine geringere katalytische Aktivität hat.

15. Wabenkörper (1) nach einem der Ansprüche 12 bis 14, **dadurch gekennzeichnet, dass** zumindest das zweite Teilvolumen (22) und/oder das dritte Teilvolumen (23) einen Austausch von Fluidströmungen benachbarter Kanäle (2) gewährleistet.

16. Wabenkörper (1) nach einem der Ansprüche 12 bis 15, **dadurch gekennzeichnet, dass** der zweite Messfühler (21) mit einem Abstand (26) von der zweiten Stirnfläche (4) positioniert ist, welcher im Bereich von 10 mm bis 30 mm liegt.

17. Wabenkörper (1) nach einem der Ansprüche 12 bis 16, **dadurch gekennzeichnet, dass** der zweite Messfühler (21) ein Sensor zur Überwachung von Stickoxid-Anteilen im Fluidstrom ist.

18. Wabenkörper (1) nach einem der vorhergehenden Ansprüche, **dadurch gekennzeichnet, dass** dieser mit zumindest teilweise strukturierten Blechfolien (27) gebildet ist, welche die Kanäle (2) begrenzen.

19. Wabenkörper (1) nach einem der vorhergehenden Ansprüche, **dadurch gekennzeichnet, dass** dieser von einem Gehäuse (28) umgeben ist, welches wenigstens eine Durchführung (29) ausweist, die zur gasdichten Fixierung des mindestens einen Messfühlers (5, 21) dient.

20. Abgasanlage (30) umfassend einen Leitungsabschnitt (31) zur Positionierung von Komponenten zur Abgasnachbehandlung, wobei wenigstens ein Wabenkörper (1) gemäß einem der vorstehenden Ansprüche vorgesehen ist, **dadurch gekennzeichnet, dass** der Leitungsabschnitt (31) eine Längsachse (32) und einen Unterboden (33) hat, wobei eine die Längsachse (32) und den tiefsten Punkt (34) des Unterbodens (33) schneidende Sekundärachse (35) gebildet ist, und der mindestens eine Messfühler (5, 21) in einem Winkelbereich (36) von 270° positioniert ist, der gegenüberliegend dem tiefsten Punkt (34) des Unterbodens (33) angeordnet ist.

21. Abgasanlage (30) nach Anspruch 20, **dadurch gekennzeichnet, dass** der mindestens eine Messfühler (5, 21) in einem Winkelbereich (36) von 45° positioniert ist, welcher sich von einer senkrecht zur Sekundärachse (35) und durch die Längsachse (32) erstrechende Tertiärachse (37) hin zum tiefsten Punkt (34) des Unterbodens (33) erstreckt.

## Claims

1. A honeycomb body (1), with channels (2) for the through flow of a fluid, running between two front faces (3, 4) and with at least one sensor (5, 21), extending, at least partly, into the honeycomb body (1), whereby a first part volume (6) of the honeycomb body (1) is defined between a first front face (3) and the at least one first sensor (5), **characterized in that** the first part volume (6) has a lower capacity for oxygen than in the at least one further part volume (22, 23).

2. Honeycomb body (1) as claimed in claim 1, in which a first part volume (6) has at least partly a first coating (7).

3. Honeycomb body (1) as claimed in claim 1 or 2, in which inside the first part volume (6) an exchange of fluid flows between adjacent channels (2) is possible.

4. Honeycomb body (1) as claimed in claim 3, in which the channel walls (9) at least inside the first part volume (6) have through holes (8), in particular with a mean diameter (10) of between 2 mm to 10 mm.

5. Honeycomb body (1) as claimed in claim 3 or 4, in which the channels (2) at least in the first part volume (6) have microstructures (11) that are used preferably to divert fluids in a direction perpendicular to an axis (12) of the honeycomb body (1).

6. Honeycomb body (1) as claimed in one of the preceding claims, in which the first part volume (6) has less than 30 %, in particular between 10 % and 25 % of the overall volume (13) of the honeycomb body (1).

7. Honeycomb body (1) as claimed in one of the preceding claims, in which the first part volume (6) has a length (14), extending from the first front face (3), of 10 mm to 40 mm.

8. Honeycomb body (1) as claimed in one of the preceding claims, in which a single sensor (5) is featured, whereby the sensor is a Lambda sensor.

9. Honeycomb body (1) as claimed in one of the preceding claims, in which the honeycomb body (1) features a recess (16) to accommodate the sensor (5, 21), the recess extending from the outer surface (15) radial in direction of the axis (12), and the recess having a maximum extension (17) of between 15 mm and 35 mm and/or a depth (18) of between 15 mm and 40 mm.

10. Honeycomb body (1) as claimed in claim 9, in which the recess (16) is narrowing in direction of the axis (12) in an oval-cylindrical, quadrangular, or conical form.

11. Honeycomb body (1) as claimed in claims 9 or 10, in which the recess (16) is at least partially surrounded by a boundary (19) that does not allow an exchange of adjacent flows, in particular does not show any through holes (8), whereby the boundary (19) preferably has a width (20) between 1 mm and 5 mm.

12. Honeycomb body (1) as claimed in one of the preceding claims, with a first sensor (5) that is a Lambda sensor and positioned closed to a first front side (3), the honeycomb body (1) featuring a second sensor (21) that is positioned between the first sensor (5) and a second front side (4) whereby between the second sensor (21) and the first sensor (5) is a second part volume (22) and between the second sensor (21) and the second front side (4) is a third part volume (23).

13. Honeycomb body (1) as claimed in claim 12, in which a second part volume (22) has at least partly a second coating (24) that shows in relation to a first coating (7) in the first part volume (6) an increased absorption capability of oxide.

14. Honeycomb body (1) as claimed in claims 12 or 13, in which the third part volume (23) has at least partly a third coating (25) that has a lesser catalytic activity related at least to a first part volume (6) and/or the second part volume (22).

15. Honeycomb body (1) as claimed in claims 12 to 14, in which at least a second part volume (22) and/or the third part volume (23) is allowing exchange of fluid flows of adjacent channels (2).

16. Honeycomb body (1) as claimed in claims 12 to 15, in which the second sensor (21) is positioned to a second front side (4) in a distance (26) of between 10 mm and 30 mm.

17. Honeycomb body (1) as claimed in claims 12 to 16, in which a second sensor (21) is a sensor to monitor the amount of nitrogen oxide inside the fluid flow.

18. Honeycomb body (1) as claimed in one of the preceding claims, that is build up of at least partly structured metal foils (27) which delimit the channels (2).

19. Honeycomb body (1) as claimed in the preceding claims, that is confined by a body (28) which has at least one duct (29) that is designed for a gas tight fixation of the at least one sensor (5, 21).

20. Exhaust system (30) with a pipe section (31) to position components for exhaust treatment with at least one honeycomb body (1) as claimed in one of the preceding claims, in which the pipe section (31) has a longitudinal axis (32) and an under body (33), in which a secondary axis (35) intersects the longitudinal axis (32) and the lowest point (34) of the under body (33) and in which the at least one sensor (5, 21) is positioned in an angular range (36) of 270°, the angular range being opposite to the lowest point (34) of the under body (33).

21. Exhaust system (30) as claimed in claim 20, in which the at least one sensor (5, 21) is positioned in an angular range (36) of 45° extending from a tertiary axis (37) to the lowest point (34) of the under body (33), whereby the tertiary axis (37) extends perpendicular to the secondary axis (35) and through the longitudinal axis (32).

## Revendications

1. Corps en nids d'abeilles (1) avec des canaux (2) à travers lesquels un fluide peut s'écouler, lesquels canaux s'étendent entre deux faces frontales (3, 4), et avec au moins un capteur (5, 21) qui s'étend au moins partiellement à l'intérieur du corps en nids d'abeilles (1), dans le cas duquel entre une première face frontale (3) et l'au moins un, premier capteur (5) un premier volume partiel (6) du corps en nids d'abeilles (1) est limité, **caractérisé en ce que** le corps en nids d'abeilles (1) a dans le premier volume partiel (6) une faculté d'absorption plus faible pour l'oxygène qu'au moins dans un autre volume partiel (22, 23).

2. Corps en nids d'abeilles (1) selon la revendication 1, **caractérisé en ce que** le premier volume partiel (6) a au moins partiellement un premier revêtement (7).

3. Corps en nids d'abeilles selon la revendication 1 ou 2, **caractérisé en ce que** dans le premier volume partiel (6) un échange de flux de fluides de canaux adjacents (2) est garanti.

4. Corps en nids d'abeilles (1) selon la revendication 3, **caractérisé en ce qu'**au moins dans le premier volume partiel (6) des passages (8) sont prévus dans les parois de canaux (9), notamment avec un diamètre moyen (10) dans la gamme de 2 mm à 10 mm.

5. Corps en nids d'abeilles (1) selon la revendication 3 ou 4, **caractérisé en ce que** les canaux (2) ont au moins dans le premier volume partiel (6) des microstructures (11) qui de préférence servent à dévier le fluide dans une direction transversale par rapport à un axe (12) du corps en nids d'abeilles (1).

6. Corps en nids d'abeilles (1) selon l'une quelconque des revendications précédentes, **caractérisé en ce que** le premier volume partiel (6) se trouve dans la marge inférieure à 30 %, notamment dans la marge de 10 % à 25 % du volume total (13) du corps en nids d'abeilles (1).

7. Corps en nids d'abeilles (1) selon l'une quelconque des revendications précédentes, **caractérisé en ce que** le premier volume partiel (6) a une longueur (14) à partir de la première face frontale (3) de 10 mm à 40 mm.

8. Corps en nids d'abeilles (1) selon l'une quelconque des revendications précédentes, **caractérisé en ce qu'**un capteur (5) individuel est prévu, lequel est un capteur lambda.

9. Corps en nids d'abeilles (1) selon l'une quelconque des revendications précédentes, **caractérisé en ce que** le corps en nids d'abeilles (1) a à partir de sa surface d'enveloppe (15) un évidement (16) s'étendant radialement en direction de son axe (12) pour recevoir le capteur (5, 21), lequel évidement a de préférence une étendue maximale (17) dans la marge de 15 mm à 35 mm et/ou une profondeur (18) dans la marge de 15 mm à 40 mm.

10. Corps en nids d'abeilles (1) selon la revendication 9, **caractérisé en ce que** l'évidement (16) a une forme ovale-cylindrique, carrée ou une forme qui se rajeunit en une forme conique en direction de l'axe (12).

11. Corps en nids d'abeilles (1) selon la revendication 9 ou 10, **caractérisé en ce que** l'évidement (16) est entouré au moins partiellement d'un bord (19) qui ne permet pas d'échange de flux adjacents, qui notamment n'a pas de passages (8), dans quel cas ce bord (19) a de préférence une largeur (20) dans la marge de 1 mm à 5 mm.

12. Corps en nids d'abeilles (1) selon l'une quelconque des revendications précédentes, **caractérisé en ce qu'**un deuxième capteur (21) est prévu qui est agencé entre un premier capteur (5) agencé à proximité de la première face frontale (3) qui est réalisé comme capteur lambda, et la deuxième face frontale (4), dans quel cas un deuxième volume partiel (22) est formé entre le deuxième capteur (21) et le premier capteur (5) et entre le deuxième capteur (21) et la deuxième face frontale (4) un troisième volume partiel (23) est formé.

13. Corps en nids d'abeilles (1) selon la revendication 12, **caractérisé en ce que** dans le deuxième volume partiel (22) un deuxième revêtement (24) est prévu au moins partiellement, qui par rapport à un premier revêtement (7) dans le premier volume partiel (6) a une faculté d'absorption d'oxygène qui a augmentée.

14. Corps en nids d'abeilles (1) selon la revendication 12 ou 13, **caractérisé en ce que** le troisième volume partiel (23) a au moins partiellement un troisième revêtement (25) qui par rapport à au moins le premier volume partiel (6) et/ou au deuxième volume partiel a une activité catalytique plus faible.

15. Corps en nids d'abeilles (1) selon l'une quelconque des revendications 12 à 14, **caractérisé en ce qu'**au moins le deuxième volume partiel (22) et/ou le troisième volume partiel (23) garantit un échange des flux de fluides de canaux (2) adjacents.

16. Corps en nids d'abeilles (1) selon l'une quelconque des revendications 12 à 15, **caractérisé en ce que** le deuxième capteur (21) est positionné avec un écart (26) de la deuxième face frontale (4) qui se trouve dans la marge de 10 mm à 30 mm.

17. Corps en nids d'abeilles (1) selon l'une quelconque des revendications 12 à 16, **caractérisé en ce que** le deuxième capteur (21) est une sonde pour contrôler des parts d'oxyde d'azote dans le flux du fluide.

18. Corps en nids d'abeilles (1) selon l'une quelconque des revendications précédentes, **caractérisé en ce que** celui-ci est formé avec des feuilles de tôles (27) au moins partiellement structurées qui limitent les canaux (2).

19. Corps en nids d'abeilles (1) selon l'une quelconque des revendications précédentes, **caractérisé en ce que** celui-ci est entouré d'un boîtier (28) qui a au moins un passage (29) qui sert à fixer de façon étanche au gaz l'au moins un capteur (5, 21).

20. Système de gaz d'échappement (30) comportant un tronçon de ligne (31) pour positionner des composants pour le post-traitement du gaz d'échappement, dans le cas duquel au moins un corps en nids d'abeilles (1) est prévu selon l'une des revendications précédentes, **caractérisé en ce que** le tronçon de ligne (31) a un axe longitudinal (32) et un sous-sol (33), dans quel cas un axe secondaire (35) coupant l'axe longitudinal (32) et le point le plus bas (34) du sous-sol (33) est formé et l'au moins un capteur (5, 21) est positionné dans une zone angulaire (36) de 270° qui est agencée en vis-à-vis du point le plus bas (34) du sous-sol (33).

21. Système de gaz d'échappement (30) selon la revendication 20, **caractérisé en ce que** l'au moins un capteur (5, 21) est positionné dans une zone angulaire (36) de 45° qui s'étend depuis un axe tertiaire (37) qui s'étend perpendiculairement par rapport à l'axe secondaire (35) et à travers l'axe longitudinal (32) jusqu'au point le plus bas (34) du sous-sol (33).
